# EUROPEAN PATENT SPECIFICATION

(11) **EP 4 337 522 B1**
(45) Date of publication and mention of the grant of the patent: **08.07.2026**
(21) Application number: 22726463.7
(22) Date of filing: 29.04.2022
(51) Int. Cl.: B63B 25/28, B63B 27/30, F03D 13/10, B63B 39/00, B63B 27/16

(54) **OFFLOADING AN OBJECT FROM A HEAVE MOTION COMPENSATED CARRIER OF A VESSEL**
ENTLADEN EINES OBJEKTS AUS EINEM TRÄGER EINES SCHIFFS MIT HUBBEWEGUNGSKOMPENSATION
DÉCHARGEMENT D'UN OBJET À PARTIR D'UN ÉLÉMENT PORTEUR À COMPENSATION DU MOUVEMENT DE HOULE D'UN NAVIRE

(30) Priority: 11.05.2021 NL 2028189
(43) Date of publication of application: 20.03.2024
(73) Proprietor: Itrec B.V., 3115 HH Schiedam (NL)
(72) Inventor: TIELEMAN, Hubertus Lourens Leendert, 3115 HH SCHIEDAM (NL); ROODENBURG, Joop, 3115 HH SCHIEDAM (NL)
(74) Representative: EP&C
(86) International application number: PCT/EP2022/061546
(87) International publication number: WO 2022/238152

(56) References cited:
- EP-A1- 2 572 976
- WO-A1-2020/245408
- US-A1- 2009 133 881
- US-A1- 2019 112 166
- US-B1- 10 308 327

## Description

The present invention relates to offloading an object from a heave motion compensated carrier of a vessel.

In the field of installation of offshore wind turbines one approach envisages that a vessel use is both for transportation of the wind turbine, or components thereof, between an onshore location and the offshore location and for installation of the wind turbine, or components thereof, at the offshore location. So, for example, the vessel is loaded with monopiles, commonly stored horizontally on deck, at the onshore location and then sails to the offshore windfarm. There the crane of the vessel is used for upending the monopile and to install the monopile, e.g. further making use of a monopile gripper to accurately position the monopile. In another example, the foundation is already installed and the vessel is loaded with the mast, nacelle, and blades or the wind turbine. The vessel sails to the windfarm and then the crane is used to install the mast on the foundation, followed by installation of the nacelle, and then the installation of the blades. Alternative installation processes are known as well.

Another approach in the field of installation of offshore wind turbines envisages that a dedicated installation vessel is positioned at the offshore location, the installation vessel having a crane configured for handling of the wind turbine and/or components thereof. A feeder vessel is then used for shuttling between an onshore location and the offshore location in order to supply wind turbine components. For example, a jack-up type or semi-submersible type installation vessel is positioned at the offshore location. The feeder vessel, e.g. self-propelled or a towed barge, is then used, for example, for supply of monopiles or other foundations.

A drawback of the "feeder vessel approach" is the need for offloading the wind turbine components from the feeder vessel. Herein, commonly, the feeder vessel is floating and therefore subject to wave-induced heave motion. On the other hand, the crane on the installation vessel is not, in a jack-up vessel, or hardly, in a semi-submersible vessel, subject to heave motion. In this approach, the relative motions in combination with the large weight of the object can be problematic. For example, offloading a monopile in horizontal orientation from the feeder vessel can be difficult, taking into account the enormous weight and dimensions, e.g. a length over 80 meters, a diameter of over 8 meters, e.g. up to 12 - 13 meters, and a weight of over 1500 tonnes.

Proposals have been made to provide the feeder vessel with a heave motion compensated carrier that is configured to support the wind turbine component thereon that is to be offloaded by the crane. The carrier is supported on the hull of the feeder vessel by means of a heave motion compensating support system. Examples of these proposals are presented in US10308327 and EP2572976.

The present invention aims to provide an improved vessel having a heave motion compensated carrier for the object to be offloaded.

The present invention provides a vessel according to claim 1 and a method according to claim 7.

The carrier for the object, e.g. wind turbine component, is supported on the hull of the vessel by means of a heave motion compensating support system, which system comprises:
- a hydraulic cylinder that is arranged between the hull and the carrier, which cylinder has a cylinder body as well as a piston and piston rod assembly delimiting a rod-side chamber and a piston-side chamber of the hydraulic cylinder,
- a hydraulic-power unit comprising a hydraulic pump which is connected to the rod-side chamber,
- a medium separator having a hydraulic-side chamber and a gas-side chamber, which hydraulic-side chamber is connected to the piston-side chamber of the hydraulic cylinder,
- a bank of pressurized gas tanks, the bank comprising a high-pressure tank and a first and a second low-pressure tank, each tank selectively connectable via a respective gas tank valve to the gas-side chamber of the medium-separator, wherein the high-pressure tank is filled with gas at a higher pressure than the low-pressure tanks,
- a controller configured to control at least the hydraulic-power unit and the gas tank valves. For example, the controller is a computerized controller.

In practical embodiments, the carrier is supported by multiple cylinders, e.g. at least three cylinders, e.g. four cylinders.

In an embodiment, all cylinders supporting one carrier are connected to a common hydraulic-power unit. In another embodiment, each cylinder is provided with its own hydraulic-power unit.

In an embodiment, all cylinders supporting one carrier are connected to a common bank of gas tanks. In another embodiment, each cylinder is provided with its own medium-separator and its own bank of gas tanks.

In an embodiment, the system supporting one carrier comprises a multiple subsystems, each subsystem comprising one or more cylinders, a medium-separator, a bank of gas tanks, and a hydraulic-power unit. The individual subsystems of the heave compensation system are then, preferably, governed by a common controller of the system. Four example, the carrier is supported on three or four subsystems, e.g. in a triangular or rectangular arrangement seen from above. For example, when the centre of gravity of the load of the object and the carrier is offset from the geometrical centre of the cylinders, resulting in an uneven load distribution over the subsystems, the pressures in the gas banks may vary between subsystems.

In practical embodiments, the carrier comprises a platform on which the object is to the placed. For example, the platform is supported by four cylinders, e.g. one cylinder at each corner of a rectangular platform.

In practical embodiments, e.g. for a lengthy monopile, the vessel is equipped with multiple carriers supporting in unison one object, e.g. a monopile being supported on two carriers spaced along the axis of the monopile. For example, for handling a nacelle, one carrier, e.g. platform, may suffice.

In practical embodiments, the carrier is a monopile carrier having a cradle for receiving the monopile therein.

In practical embodiments, the cylinder is vertically mounted between the hull and the carrier, e.g. the cylinder body mounted to the hull and the end of the piston rod mounted to the carrier.

In practical embodiments, the carrier is vertically guided relative to the hull by a guide assembly distinct from the one or more cylinders of the heave compensation system.

The inventive system and method envisage a sequence of modes that includes at least:
- an initial full load support mode,
- a first partial load transfer mode,
- a second partial load transfer mode,
- a full load transfer mode.

In the initial full load support mode, the high-pressure tank is connected to the gas-side chamber of the medium-separator so that the hydraulic pressure created thereby in the piston-side chamber supports the load of the object and the carrier so as to provide for passive heave motion compensation.

In the first partial load transfer mode, which mode is to be selected when the object has been coupled to the offloading device, in addition to the high-pressure tank, the first low-pressure tank is connected to the gas-side chamber of the medium-separator so that a first part of the load of the object is transferred to the offloading device. For example, the first part of the load transferred to the offloading device corresponds to between 40 - 60% of the load of the object.

In the second partial load transfer mode, in addition to the high-pressure tank and the first low-pressure tank, the second low-pressure tank is connected to the gas-side chamber of the medium-separator so that in addition to the first part of the load of the object a second part of the load of the object is transferred to the offloading device with a remaining part of the load of the object still being supported on the carrier. For example, the second part of the load transferred to the offloading device corresponds to between 20 - 40% of the load of the object. For example, the remaining part of the load is between 10 - 30% of the load of the object.

In the full load transfer mode, with the high-pressure tank, the first low-pressure tank, and the second low-pressure tank connected to the gas-side chamber of the medium-separator, the hydraulic-power unit is operated so as to increase hydraulic pressure in the piston-side chamber so as to cause transfer of the remaining part of the load of the object to the offloading device.

The invention proposes a stepwise transfer in multiple steps of the load of the object to be offloaded from the carrier to the offloading device, e.g. to the crane mounted on the other vessel or offshore structure. Herein effective use is made of the bank of gas tanks and the hydraulic-power unit to achieve the sequence of modes. Due to the stepwise transfer, any sudden overloading of the offloading device, can be avoided.

In an embodiment, the controller is further configured to control the hydraulic-power unit (so as to provide, in the initial full load support mode, a constant pre-tension load by causing a constant hydraulic pressure in the piston-side chamber. The pre-tension load can, in practical embodiments, be rather small compared to the load of the object combined with the carrier. The pre-tension may serve to avoid undue extension of the piston and piston rod assembly when the system is functioning in passive heave compensation mode, e.g. to avoid this assembly from reaching a fully extended end position that may entail an internal impact in the cylinder. The hydraulic-power unit may comprise an accumulator set at the pressure corresponding to the pre-tension load to absorb volume variations, e.g. when the system provides passive heave compensation of the carrier.

In an embodiment, the controller is further configured to control the hydraulic-power unit so as to provide, in the each of the first and the second partial load transfer modes, an active heave motion compensation of the carrier. As in these modes the load of the object has already been transferred in part to the offloading device, the provision of active heave motion compensation of the carrier reduces any heave induced load variation on the offloading device. This, in turn, may allow for the offloading device to have no or limited heave motion compensation capabilities itself, e.g. any heave motion compensation device of the offloading device being allowed to have a fairly slow response to such variations and/or allowed to have a limited range of heave compensation.

In embodiments, the controller is further configured to control the hydraulic-power unit so as to cause, in the full load transfer mode, a clearance between the carrier and the object coupled to the offloading device. By providing a clearance the risk of a later collision between the offloaded object and the carrier may be reduced or avoided all together. For example, the controller governs a retraction of the piston and piston assembly of the cylinder beyond the position that corresponds to the completion of load transfer to the offloading device. This may be a rapid retraction, e.g. to provide sufficient clearance before the next wave causes the carrier to rise in a manner that could cause a collision. For example, the controller is connected to one or more position sensors determining height of the object relative to the hull of the vessel and/or to the carrier. The sensors can be of any suitable design, e.g. including one or more camera's, radar, laser distance measuring sensors, etc.

In embodiments, the controller is connected to one or more heave motion sensors determining heave motion of the vessel and/or the carrier. For example, signals from these heave motion sensors are used in the active heave motion as discussed herein.

As discussed in the introduction, the invention may be of practical benefit in the field of offshore wind turbines. For example, the object is one of:
- a foundation to be installed on the seabed, e.g. a monopile or jacket foundation,
- a mast, e.g. a complete mast or a mast segment,
- a nacelle, e.g. a nacelle devoid of rotor blades or a nacelle equipped with one or more rotor blades, e.g. a nacelle with rotor blades in bunny ears configuration,
- a rotor blade, e.g. a rack holding multiple rotor blades.

For example, the offloading device is a crane mounted on another vessel, e.g. on a semi-submersible vessel or on a jack-up type vessel, e.g. the crane being mounted on the hull of a jack-up type vessel that has been raised above the sea prior to offloading the object from vessel.

The invention also relates to a marine heave motion compensated carrier and an associated a heave motion compensating support system as described herein by means of which the carrier is to be supported on the hull of a vessel, which carrier is configured to support an object thereon that is to be offloaded by an offloading device, e.g. a crane, of another vessel or offshore structure.

The invention also relates to a heave motion compensating support system as described herein by means of which a carrier is to be supported on the hull of a vessel, as well as the use of the system for this purpose.

The invention also relates to the transportation of one or more wind turbine components from an onshore location to an offshore windfarm, wherein use is made of a vessel as described herein. For example, the wind turbine component is a foundation, e.g. a monopile foundation or a jacket foundation, or is a mast, or is a nacelle, or is a wind turbine rotor blade, or is a nacelle equipped with one or more wind turbine rotor blades.

The invention will now be described with reference to the drawings. In the drawings:
- Figure 1: illustrates schematically a vessel according to the invention,
- Figure 2: illustrates schematically an embodiment of a vessel according to the invention,
- Figures 3a-e: illustrate the offloading of an object from the carrier of the vessel of figure 1.

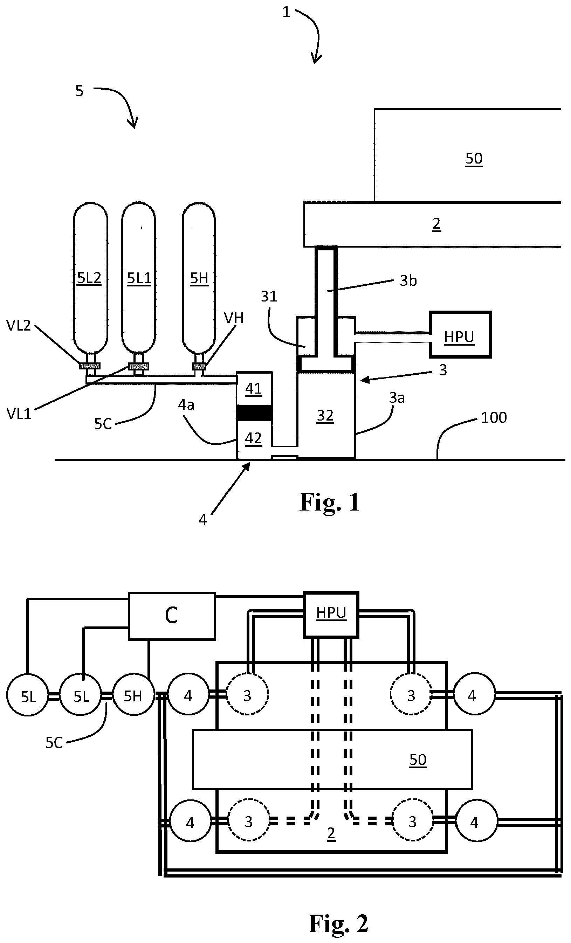

Figure 1 schematically indicates hull 100 of a vessel 1, e.g. for supply of wind turbine components to an offshore location. The hull 100 is subject to wave-induced heave motion, not only during sailing the vessel to the offshore location but also during offloading of an object as discussed below.

For example, the hull 100 is a monohull.

For example, the vessel 1 is self-propelled, e.g. having a bow provided with a superstructure housing the bridge and crew accommodations and a deck aft thereof.

The vessel 1 is provided with a heave motion compensated carrier 2, that is configured to support an object 50 thereon that is to be offloaded by an offloading device, e.g. a crane, of another vessel or offshore structure. For example, a vessel 1 has one or more carriers 2 on a deck thereof.

For example, as shown, the carrier 2 is embodied as a platform on which the object 50 is placed, e.g. using sea-fastening to keep the object securely in place during sailing to the offshore location on the carrier.

For sake of ease of understanding, it is assumed that the object is a wind turbine component, e.g. a nacelle 50 of a wind turbine. It is noted that in present day offshore wind turbines the nacelle, devoid of any blades, may weigh more than 500 tonnes, e.g. about 650 tonnes.

The carrier 2 is supported on the hull 100 of the vessel 1 by means of a heave motion compensating support system. This system comprises:
- a hydraulic cylinder 3 arranged between the hull 100 and the carrier 2, which cylinder has a cylinder body 3a as well as a piston and piston rod assembly 3b delimiting a rod-side chamber 31 and a piston-side chamber 32 of the hydraulic cylinder,
- a hydraulic-power unit, denoted with HPU, comprising a hydraulic pump which is connected to the rod-side chamber 31,
- a medium separator 4 having a hydraulic-side chamber 42 and a gas-side chamber 41 separated by a piston, which hydraulic-side chamber 42 is connected to the piston-side chamber 32 of the hydraulic cylinder 3,
- a bank 5 of pressurized gas tanks, the bank comprising a high-pressure tank 5H and a first and low-pressure tank 5L1 as well as a second low-pressure tank 5L2, each tank selectively connectable via a respective gas tank valve VH, VL1, VL2, via common duct 5C to the gas-side chamber 41 of the medium-separator, wherein the high-pressure tank 5H is filled with gas at a higher pressure than the low-pressure tanks 5L1, 5L2, for example the gas is nitrogen gas,
- a controller, denoted with C, which is configured to control at least the hydraulic-power unit HPU and the gas tank valves VH, VL1, VL2.

As can be seen in figure 2, in practical embodiments, multiple cylinders 3 support one carrier 2, e.g. four cylinders, e.g. each cylinder 3 at a corner of a rectangular platform type carrier 2. As can be seen in figure 2, in embodiments, the cylinders 3 associated with a carrier 2 all connect to the same hydraulic-power unit HPU and the same bank 5 of pressurized gas tanks.

In another embodiment, the system supporting the one carrier 2 comprises multiple subsystems, e.g. four, each subsystem comprising one or more cylinders 3 , a medium-separator 4, a bank of gas tanks 5, and a hydraulic-power unit HPU. The individual subsystems of the heave compensation system are then preferably governed by a common controller C of the system. For example, when the centre of gravity of the load of the object and the carrier is offset from the geometrical centre of the cylinders, resulting in an uneven load distribution over the subsystems, the pressures in the gas banks 5 may vary between subsystems.

For example, the bank of gas tanks associated with one cylinder 3 comprises a high pressure gas tank H5 of at least 1000 litres, e.g. filled at a pressure above 15 MPa (150 bars).

For example, the bank of gas tanks associated with one cylinder 3 comprises a two low-pressure gas tanks 5L1, 5L2, of each at least 500 litres, e.g. filled at a pressure below 10 MPa (100 bars), e.g. at the same low pressure.

The pressure in each gas tank 5H, 5L1, 5L2, may be set on the basis of prior calculations.

For example, the carrier 2 has a weight of 300 tonnes and is configured to support thereon an object 50 of a maximum weight of 800 tonnes. When multiple cylinders 3, e.g. four, are evenly distributed relative to the common centre of gravity of this combined load, the cylinders each support an equal portion thereof.

For example, the cylinders 3 have a stroke length of at least 2 meters, e.g. of between 3 and 4 meters.

For example, the cylinders 3 have a bore and piston diameter of 460 mm and a piston rod diameter of 325 mm, e.g. with a stroke length of at least 2 meters, e.g. of between 3 and 4 meters.

The depicted system is configured to provide a sequence of modes that includes at least:
- an initial full load support mode,
- a first partial load transfer mode,
- a second partial load transfer mode, and
- a full load transfer mode.

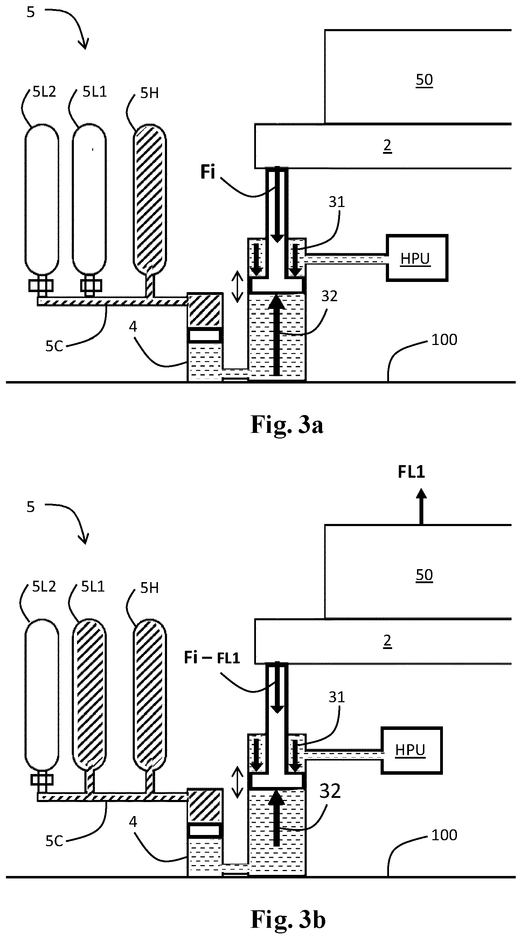

Figure 3a schematically illustrates an embodiment t of the initial full load support mode. Herein the valve VH is open and the other valves VL1, VL2 are closed so that only the high-pressure tank 5H is connected to the gas-side chamber 41 of the medium-separator 4. Thereby the hydraulic pressure created in the piston-side chamber 32 supports the load, indicated with Fi, of the object 50 and the carrier 2 so as to provide for passive heave motion compensation.

Figure 3a also schematically illustrates the option, wherein the controller C is further configured to control the hydraulic-power unit HPU so as to provide, in the initial full load support mode, a constant pre-tension load by causing a constant hydraulic pressure in the piston-side chamber 31. The pre-tension load can, in practical embodiments, be rather small compared to the load Fi of the object combined with the carrier. The pre-tension may serve to avoid undue extension of the piston and piston rod assembly when the system is functioning in passive heave compensation mode, e.g. to avoid this assembly from reaching a fully extended end position that may entail an internal impact in the cylinder. The hydraulic-power unit HPU may comprise an accumulator set at the pressure corresponding to the pre-tension load to absorb volume variations, e.g. when the system provides passive heave compensation of the carrier.

For example, the vessel 1 is moved into reach of a crane mounted on another vessel, e.g. a semi-submersible vessel or a jack-up type vessel, that is already present at the offshore location where the wind turbine is to be installed. Then the carrier 2, which may have been in a stationary resting position during sailing of the vessel 1 to this location, may be brought into the mode depicted in figure 3a. For example, during sailing with the vessel 1 to the offshore location the carrier is in a stationary resting position wherein all gas tanks valves are closed and the cylinders 3 are retracted, e.g. the carrier 2 resting on carrier supports integrated with the hull, e.g. with the deck, of the vessel 1.

When in the initial full load support mode, the object 50 is at least passively heave compensated by the system. In an embodiment, even during this mode, the hydraulic-power unit HPU is operated to provide active heave compensation, e.g. the operation of the HPU being controlled on the basis of one or more heave motion sensors.

In a practical embodiment, once the initial full load support mode is operative, the object 50 is coupled to the offloading device. In this mode the object 50 is still primarily supported on the carrier 2 which facilitates operations of the crane needed to establish the coupling. For example, the crane has a winch drive cable with a hook from which one or more hoisting slings depend, e.g. suspended from an intermediate spreader. The hoisting slings are then connected to the object 50. The crane winch may then be operated to remove slack.

Now that the object 50 has been coupled to the crane or other offloading device, the system is brought into the first partial load transfer mode, which is schematically depicted in figure 3b. As can be seen, in addition to the high-pressure tank 5H, the first low-pressure tank 5L1 is connected to the gas-side chamber 41 of the medium-separator by opening valve VL1. This results in a pressure drop at the gas-side chamber 41 and thus in the piston-side chamber 32, so that a first part FL1 of the load of the object is transferred from the carrier 2 to the offloading device. As discussed, for example, the part FL1 is between 40 - 60% of the load Fi.

Switching to the first partial load transfer mode is done in a short time span as the opening of the valve VL1 takes little time, resulting in a quasi-instantaneous change of pressure.

Figure 3b also illustrates that in this first partial load transfer mode, the hydraulic-power unit HPU is operated to provide active heave compensation of the carrier 3. This reduces or avoids load variation on the offloading device.

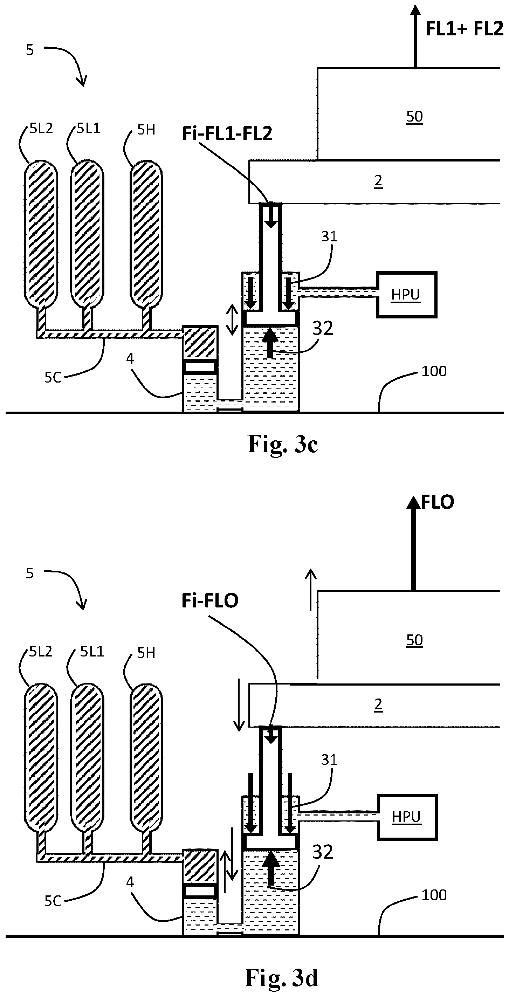

Figure 3c illustrates the further progress of the sequence, wherein in the second partial load transfer mode, in addition to the high-pressure tank 5H and the first low-pressure tank 5L1, the second low-pressure tank 5L2 is connected to the gas-side chamber 41 of the medium-separator by opening valve VL2. This result in a further pressure drop at the gas-side chamber 41 and thus in the piston-side chamber 32, so that in addition to the first part FL1 of the load of the object a second part FL2 of the load of the object is transferred to the offloading device with a remaining part of the load of the object still being supported on the carrier 2. As discussed, in embodiments, the second part of the load transferred to the offloading device corresponds to between 20 - 40% of the load of the object 50, for example such that the remaining part of the load is between 10 - 30% of the load of the object.

Switching to the second partial load transfer mode is done in a short time span as the opening of the valve VL2 takes little time, resulting in a quasi-instantaneous change of pressure.

Figure 3c also illustrates that in this second partial load transfer mode, the hydraulic-power unit HPU is operated to provide active heave compensation of the carrier 3. This reduces or avoids load variation on the offloading device.

Figure 3d illustrates the further progress of the sequence, wherein in the full load transfer mode, with the high-pressure tank 5H, the first low-pressure tank 5L1, and the second low-pressure tank remaining connected to the gas-side chamber 41 of the medium-separator, the hydraulic-power unit HPU is operated so as to increase hydraulic pressure in the piston-side chamber 32 of the cylinder 3 so as to cause transfer of the remaining part of the load of the object 50 to the offloading device. In this mode, the cylinder 3 only supports the weight of the carrier 2. In practice this weight can be substantial, e.g. over 100 tonnes.

In embodiments, the controller C comprises a portable control unit to be operated by a human operator.

In embodiments, the controller C is configured to automatically determine the moment of switching to the full load transfer mode, e.g. on the basis of evaluation of the wave induced motion of the vessel, e.g. in view of avoidance of a collision between the object and the carrier after the offloading of the object.

In embodiments, the controller C is configured to communicate, e.g. wireless, with the offloading device, e.g. the crane on the other vessel or other offshore structure, e.g. in view of operation of a crane winch and/or of a heave compensation system associated with the offloading device, etc.

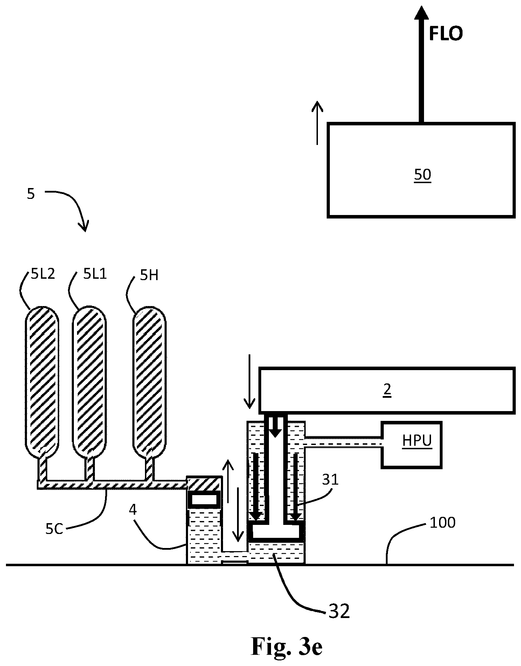

Figure 3e illustrates that the controller C is further configured to control the hydraulic-power unit HPU so as to cause, in the full load transfer mode, a clearance between the carrier 2 and the object 50 coupled to the offloading device by continued retraction of the cylinder 3 from the position wherein the load had been fully transferred. As discussed, a rapid performance of such additional retraction of the cylinder 3 may be of use to avoid any collision between the carrier 2 and the object 50 that has been offloaded from the carrier 2. Of course, the crane or the like may at the same time be operated to increase this vertical spacing as well.

It is noted that each of the gas tanks H, VL1, VL2 may in practice be composed of group of gas tanks in view of gas volume required for proper operation of the system.

It is noted that sizable dimension of gas ducts as well as of hydraulic ducts is considered desirable in practical embodiments, e.g. to avoid undue flow resistance and enhance responsiveness of the system.

## Claims

1. Vessel (1) having a hull (100) subject to wave-induced heave motion and provided with a heave motion compensated carrier (2) configured to support an object (50) thereon that is to be offloaded by an offloading device, e.g. a crane, of another vessel or offshore structure,
wherein the carrier (2) is supported on the hull of the vessel (100) by means of a heave motion compensating support system, which system comprises:
- a hydraulic cylinder (3) arranged between the hull and the carrier (2), which cylinder has a cylinder body (3a) as well as a piston and piston rod assembly (3b) delimiting a rod-side chamber (31) and a piston-side chamber (32) of the hydraulic cylinder,
- a hydraulic-power unit (HPU) comprising a hydraulic pump which is connected to the rod-side chamber (31),
**characterized in that** the heave motion compensating support system further comprises:
- a medium separator (4) having a hydraulic-side chamber (42) and a gas-side chamber (41), which hydraulic-side chamber (42) is connected to the piston-side chamber (32) of the hydraulic cylinder (3),
- a bank of pressurized gas tanks, the bank comprising a high-pressure tank (5H) and a first low-pressure tank and a second low-pressure tank (5L1, 5L2), each tank selectively connectable via a respective gas tank valve (VH,VL1,VL2) to the gas-side chamber (41) of the medium-separator, wherein the high-pressure tank (H) is filled with gas at a higher pressure than the low-pressure tanks (5L1,5L2),
- a controller (C) configured to control at least the hydraulic-power unit (HPU) and the gas tank valves (VH,VL1,VL2),
wherein the system is configured to provide a sequence of modes that includes at least:
- an initial full load support mode,
- a first partial load transfer mode,
- a second partial load transfer mode,
- a full load transfer mode,
wherein:
- in the initial full load support mode the high-pressure tank (5H) is connected to the gas-side chamber (41) of the medium-separator (4) so that the hydraulic pressure created thereby in the piston-side chamber (32) supports the load of the object (50) and the carrier (2) so as to provide for passive heave motion compensation,
- in the first partial load transfer mode - to be selected when the object (50) has been coupled to an offloading device, e.g. a crane, of another vessel or offshore structure - in addition to the high-pressure tank (5H), the first low-pressure tank (5L1) is connected to the gas-side chamber (41) of the medium-separator (4) so that a first part (FL1) of the load of the object is transferred to the offloading device,
- in the second partial load transfer mode, in addition to the high-pressure tank (5H) and the first low-pressure tank (5L1), the second low-pressure tank (5L2) is connected to the gas-side chamber (41) of the medium-separator so that in addition to the first part of the load of the object a second part (FL2) of the load of the object is transferred to the offloading device with a remaining part of the load of the object still being supported on the carrier (2),
- in the full load transfer mode, with the high-pressure tank (5H), the first low-pressure tank (5L1), and the second low-pressure tank connected to the gas-side chamber (41) of the medium-separator, the hydraulic-power unit (HPU) is operated so as to increase hydraulic pressure in the piston-side chamber (32) so as to cause transfer of the remaining part of the load of the object (50) to the offloading device.

2. Vessel according to claim 1, wherein the controller (C) is further configured to control the hydraulic-power unit (HPU) so as to provide, in the initial full load support mode, a constant pre-tension load by causing a constant hydraulic pressure in the piston-side chamber.

3. Vessel according to claim 1 or 2, wherein the controller (C) is further configured to control the hydraulic-power unit (HPU) so as to provide, in the each of the first and the second partial load transfer modes, an active heave motion compensation.

4. Vessel according to any one or more of claims 1 - 3, wherein the controller is further configured to control the hydraulic-power unit (HPU) so as to cause, in the full load transfer mode, a clearance between the carrier (2) and the object (50) coupled to the offloading device.

5. Vessel according to any one or more of claims 1 - 4, wherein the controller is connected to one or more heave motion sensors determining heave motion of the vessel and/or the carrier.

6. Vessel according to any one or more of claims 1 - 5, wherein the controller is connected to one or more position sensors determining a height of the object relative to the hull of the vessel and/or to the carrier.

7. Method for offloading an object (50) that is supported on a heave motion compensated carrier (2) of a vessel (1) according to one or more of the preceding claims, the vessel having a hull subject to wave-induced heave motion, in which method use is made of an offloading device, e.g. a crane, of another vessel or offshore structure,
wherein the method comprises the step of coupling the object to the offloading device,
wherein the method involves a sequence of modes of the heave motion compensating support system, that includes at least:
- an initial full load support mode,
- a first partial load transfer mode,
- a second partial load transfer mode, and
- a full load transfer mode,
wherein:
- in the initial full load support mode the high-pressure tank (5H) is connected to the gas-side chamber (41) of the medium-separator so that the hydraulic pressure created thereby in the piston-side chamber (32) supports the load of the object and the carrier so as to provide for passive heave motion compensation,
- in the first partial load transfer mode - to be selected when the object has been coupled to the offloading device - in addition to the high-pressure tank (5H), the first low-pressure tank (5L1) is connected to the gas-side chamber (41) of the medium-separator so that a first part of the load of the object is transferred to the offloading device,
- in the second partial load transfer mode, in addition to the high-pressure tank (5H) and the first low-pressure tank (5L1), the second low-pressure tank (5L2) is connected to the gas-side chamber (41) of the medium-separator so that in addition to the first part of the load of the object a second part of the load of the object is transferred to the offloading device with a remaining part of the load of the object still being supported on the carrier,
- in the full load transfer mode, with the high-pressure tank (5H), the first low-pressure tank (5L1), and the second low-pressure tank connected to the gas-side chamber (41) of the medium-separator, the controller controls the hydraulic-power unit (HPU) so as to increase hydraulic pressure in the piston-side chamber (32) so as to cause transfer of the remaining part of the load of the object to the offloading device.

8. Method according to claim 7, wherein the controller is further configured and operated to control the hydraulic-power unit (HPU) so as to provide, in the initial full load support mode, a constant pre-tension load by causing a constant hydraulic pressure in the piston-side chamber.

9. Method according to claim 7 or 8, wherein the controller (C) is further configured and operated to control the hydraulic-power unit (HPU) so as to provide, in the each of the first and the second partial load transfer modes, an active heave motion compensation, e.g. wherein the controller is connected to one or more heave motion sensors determining heave motion of the vessel and/or the carrier.

10. Method according to any one or more of claims 7 - 9, wherein the controller (C) is further configured and operated to control the hydraulic-power unit (HPU) so as to cause, in the full load transfer mode, a clearance between the carrier and the object coupled to the offloading device, e.g. a retraction of the piston and piston assembly of the cylinder beyond the position corresponding to completion of load transfer to the offloading device, e.g. wherein the controller is connected to one or more position sensors determining height of the object relative to the hull of the vessel and/or to the carrier.

11. Method according to any one or more of claims 7 - 10, wherein the first part of the load transferred to the offloading device corresponds to between 40 - 60% of the load of the object, and wherein the second part of the load transferred to the offloading device corresponds to between 20 - 40% of the load of the object such that the remaining part of the load is between 10 - 30% of the load of the object.

12. Method according to any one or more of claims 7 - 11, wherein the object is an offshore wind turbine component, e.g. one of:
- a foundation to be installed on the seabed, e.g. a monopile or jacket foundation,
- a mast, e.g. a complete mast or a mast segment,
- a nacelle, e.g. a nacelle devoid of rotor blades or a nacelle equipped with one or more rotor blades, e.g. a nacelle with rotor blades in bunny ears configuration, and
- a rotor blade, e.g. a rack holding multiple rotor blades.

13. Method according to any one or more of claims 7 - 12, wherein the offloading device is a crane mounted on another vessel, e.g. on a semi-submersible vessel or on a jack-up type vessel, e.g. the crane being mounted on the hull of a jack-up type vessel that has been raised above the sea prior to offloading the object from the vessel.

## Patentansprüche

1. Schiff (1) mit einem Rumpf (100), der einer welleninduzierten Hubbewegung unterliegt, und mit einem seegangskompensierten Träger (2) versehen ist, der dazu ausgelegt ist, ein darauf angeordnetes Objekt (50) zu tragen, der mittels einer Entladevorrichtung, beispielsweise eines Krans, eines anderen Schiffs oder einer Offshore-Struktur, entladen werden soll,
wobei der Träger (2) auf dem Rumpf des Schiffs (100) mittels eines Hubbewegungen kompensierenden Trägersystems abgestützt ist, wobei das System umfasst:
- einen zwischen dem Rumpf und dem Träger (2) angeordneten Hydraulikzylinder (3), wobei der Zylinder einen Zylinderkörper (3a) sowie eine Kolben- und Kolbenstangenanordnung (3b) aufweist, die eine stangenseitige Kammer (31) und eine kolbenseitige Kammer (32) des Hydraulikzylinders begrenzt,
- ein Hydraulikaggregat (HPU) umfassend eine Hydraulikpumpe, die mit der stangenseitigen Kammer (31) verbunden ist,
**dadurch gekennzeichnet, dass** das Hubbewegungen kompensierende Trägersystem ferner umfasst:
- einen Medientrenner (4) mit einer hydraulikseitigen Kammer (42) und einer gasseitigen Kammer (41), wobei die hydraulikseitige Kammer (42) mit der kolbenseitigen Kammer (32) des Hydraulikzylinders (3) verbunden ist,
- eine Bank von Druckgastanks, wobei die Bank einen Hochdrucktank (5H) sowie einen ersten Niederdrucktank und einen zweiten Niederdrucktank (5L1, 5L2) umfasst, wobei jeder Tank über ein jeweiliges Gastankventil (VH, VL1, VL2) selektiv mit der gasseitigen Kammer (41) des Medientrenners verbindbar ist, wobei der Hochdrucktank (5H) mit Gas bei einem höheren Druck als die Niederdrucktanks (5L1, 5L2) gefüllt ist,
- eine Steuervorrichtung (C), die dazu ausgelegt ist, zumindest das Hydraulikaggregat (HPU) und die Gastankventile (VH, VL1, VL2) zu steuern, wobei das System dazu ausgelegt ist, eine Folge von Betriebsmodi bereitzustellen, die zumindest umfasst:
- einen anfänglichen Volllaststützmodus,
- einen ersten Teillastübertragungsmodus,
- einen zweiten Teillastübertragungsmodus,
- einen Volllastübertragungsmodus,
wobei:
- im anfänglichen Volllaststützmodus der Hochdrucktank (5H) mit der gasseitigen Kammer (41) des Medientrenners (4) verbunden ist, sodass der dadurch in der kolbenseitigen Kammer (32) erzeugte Hydraulikdruck die Last des Objekts (50) und des Trägers (2) abstützt, um eine passive Hubbewegungskompensation bereitzustellen,
- im ersten Teillastübertragungsmodus - der ausgewählt werden soll, wenn das Objekt (50) mit einer Entladevorrichtung, beispielsweise einem Kran, eines anderen Schiffs oder einer Offshore-Struktur gekoppelt worden ist - zusätzlich zum Hochdrucktank (5H) der erste Niederdrucktank (5L1) mit der gasseitigen Kammer (41) des Medientrenners (4) verbunden ist, sodass ein erster Teil (FL1) der Last des Objekts auf die Entladevorrichtung übertragen wird,
- im zweiten Teillastübertragungsmodus zusätzlich zu dem Hochdrucktank (5H) und dem ersten Niederdrucktank (5L1) der zweite Niederdrucktank (5L2) mit der gasseitigen Kammer (41) des Medientrenners verbunden ist, sodass zusätzlich zum ersten Teil der Last des Objekts ein zweiter Teil (FL2) der Last des Objekts auf die Entladevorrichtung übertragen wird, wobei ein verbleibender Teil der Last des Objekts weiterhin auf dem Träger (2) abgestützt wird,
- im Volllastübertragungsmodus bei mit der gasseitigen Kammer (41) des Medientrenners verbundenem Hochdrucktank (5H), erstem Niederdrucktank (5L1) und zweitem Niederdrucktank das Hydraulikaggregat (HPU) betrieben wird, um den Hydraulikdruck in der kolbenseitigen Kammer (32) zu erhöhen, sodass die Übertragung des verbleibenden Teils der Last des Objekts (50) auf die Entladevorrichtung bewirkt wird.

2. Schiff nach Anspruch 1, wobei die Steuervorrichtung (C) ferner dazu ausgelegt ist, das Hydraulikaggregat (HPU) derart zu steuern, dass im anfänglichen Volllaststützmodus eine konstante Vorspannlast durch Erzeugen eines konstanten Hydraulikdrucks in der kolbenseitigen Kammer bereitgestellt wird.

3. Schiff nach Anspruch 1 oder 2, wobei die Steuervorrichtung (C) ferner dazu ausgelegt ist, das Hydraulikaggregat (HPU) derart zu steuern, dass in jedem des ersten und des zweiten Teillastübertragungsmodus eine aktive Hubbewegungskompensation bereitgestellt wird.

4. Schiff nach einem oder mehreren der Ansprüche 1 - 3, wobei die Steuervorrichtung ferner dazu ausgelegt ist, das Hydraulikaggregat (HPU) derart zu steuern, dass im Volllastübertragungsmodus ein Abstand zwischen dem Träger (2) und dem mit der Entladevorrichtung gekoppelten Objekt (50) bewirkt wird.

5. Schiff nach einem oder mehreren der Ansprüche 1 - 4, wobei die Steuervorrichtung mit einem oder mehreren Hubbewegungssensoren verbunden ist, die eine Hubbewegung des Schiffs und/oder des Trägers bestimmen.

6. Schiff nach einem oder mehreren der Ansprüche 1 bis 5, wobei die Steuervorrichtung mit einem oder mehreren Positionssensoren verbunden ist, die eine Höhe des Objekts relativ zum Rumpf des Schiffs und/oder zum Träger bestimmen.

7. Verfahren zum Entladen eines Objekts (50), das auf einem hubbewegungskompensierten Träger (2) eines Schiffs (1) nach einem oder mehreren der vorhergehenden Ansprüche abgestützt ist, wobei das Schiff einen einer welleninduzierten Hubbewegung unterliegenden Rumpf aufweist, wobei bei dem Verfahren eine Entladevorrichtung, beispielsweise ein Kran, eines anderen Schiffs oder einer Offshore-Struktur verwendet wird,
wobei das Verfahren den Schritt des Koppelns des Objekts mit der Entladevorrichtung umfasst,
wobei das Verfahren eine Folge von Betriebsmodi des hubbewegungskompensierenden Trägersystems umfasst, die zumindest umfasst:
- einen anfänglichen Volllaststützmodus,
- einen ersten Teillastübertragungsmodus,
- einen zweiten Teillastübertragungsmodus, und
- einen Volllastübertragungsmodus,
wobei:
- im anfänglichen Volllaststützmodus der Hochdrucktank (5H) mit der gasseitigen Kammer (41) des Medientrenners verbunden ist, sodass der dadurch in der kolbenseitigen Kammer (32) erzeugte Hydraulikdruck die Last des Objekts und des Trägers abstützt, um eine passive Hubbewegungskompensation bereitzustellen,
- im ersten Teillastübertragungsmodus - der ausgewählt werden soll, wenn das Objekt mit der Entladevorrichtung gekoppelt worden ist - zusätzlich zum Hochdrucktank (5H) der erste Niederdrucktank (5L1) mit der gasseitigen Kammer (41) des Medientrenners verbunden ist, sodass ein erster Teil der Last des Objekts auf die Entladevorrichtung übertragen wird,
- im zweiten Teillastübertragungsmodus zusätzlich zu dem Hochdrucktank (5H) und dem ersten Niederdrucktank (5L1) der zweite Niederdrucktank (5L2) mit der gasseitigen Kammer (41) des Medientrenners verbunden ist, sodass zusätzlich zum ersten Teil der Last des Objekts ein zweiter Teil der Last des Objekts auf die Entladevorrichtung übertragen wird, wobei ein verbleibender Teil der Last des Objekts weiterhin auf dem Träger abgestützt wird,
- im Volllastübertragungsmodus bei mit der gasseitigen Kammer (41) des Medientrenners verbundenem Hochdrucktank (5H), erstem Niederdrucktank (5L1) und zweitem Niederdrucktank die Steuervorrichtung das Hydraulikaggregat (HPU) steuert, um den Hydraulikdruck in der kolbenseitigen Kammer (32) zu erhöhen, sodass die Übertragung des verbleibenden Teils der Last des Objekts auf die Entladevorrichtung bewirkt wird.

8. Verfahren nach Anspruch 7, wobei die Steuervorrichtung ferner dazu ausgelegt ist und betrieben wird, das Hydraulikaggregat (HPU) derart zu steuern, dass im anfänglichen Volllaststützmodus eine konstante Vorspannlast durch Erzeugen eines konstanten Hydraulikdrucks in der kolbenseitigen Kammer bereitgestellt wird.

9. Verfahren nach Anspruch 7 oder 8, wobei die Steuervorrichtung (C) ferner dazu ausgelegt ist und betrieben wird, das Hydraulikaggregat (HPU) derart zu steuern, dass in jedem des ersten und des zweiten Teillastübertragungsmodus eine aktive Hubbewegungskompensation bereitgestellt wird, beispielsweise wobei die Steuervorrichtung mit einem oder mehreren Hubbewegungssensoren verbunden ist, die eine Hubbewegung des Schiffs und/oder des Trägers bestimmen.

10. Verfahren nach einem oder mehreren der Ansprüche 7 - 9, wobei die Steuervorrichtung (C) ferner dazu ausgelegt ist und betrieben wird, das Hydraulikaggregat (HPU) derart zu steuern, dass im Volllastübertragungsmodus ein Abstand zwischen dem Träger und dem mit der Entladevorrichtung gekoppelten Objekt bewirkt wird, beispielsweise ein Einfahren der Kolben- und Kolbenanordnung des Zylinders über die der Vollendung der Lastübertragung auf die Entladevorrichtung entsprechende Position hinaus, beispielsweise wobei die Steuervorrichtung mit einem oder mehreren Positionssensoren verbunden ist, die eine Höhe des Objekts relativ zum Rumpf des Schiffs und/oder zum Träger bestimmen.

11. Verfahren nach einem oder mehreren der Ansprüche 7 - 10, wobei der erste auf die Entladevorrichtung übertragene Teil der Last zwischen 40 und 60 % der Last des Objekts entspricht und wobei der zweite auf die Entladevorrichtung übertragene Teil der Last zwischen 20 und 40 % der Last des Objekts entspricht, sodass der verbleibende Teil der Last zwischen 10 und 30 % der Last des Objekts beträgt.

12. Verfahren nach einem oder mehreren der Ansprüche 7 - 11, wobei das Objekt eine Offshore-Windturbinenkomponente ist, beispielsweise eines von:
- einem auf dem Meeresboden zu installierenden Fundament, beispielsweise ein Monopile- oder Jacket-Fundament,
- einem Mast, beispielsweise einem vollständigen Mast oder einem Mastsegment,
- einer Gondel, beispielsweise einer von Rotorblättern freien Gondel oder einer mit einem oder mehreren Rotorblättern ausgestatteten Gondel, beispielsweise einer Gondel mit Rotorblättern in Bunny-Ears-Konfiguration, und
- einem Rotorblatt, beispielsweise einem mehrere Rotorblätter haltenden Gestell.

13. Verfahren nach einem oder mehreren der Ansprüche 7 - 12, wobei die Entladevorrichtung ein auf einem anderen Schiff montierter Kran ist, beispielsweise auf einem Halbtaucherschiff oder auf einem Hubinselschiff, beispielsweise wobei der Kran auf dem Rumpf eines Hubinselschiffs montiert ist, das vor dem Entladen des Objekts über den Meeresspiegel angehoben worden ist.

## Revendications

1. Navire (1) ayant une coque (100) soumise à un mouvement de pilonnement induit par les vagues et pourvu d'un élément porteur (2) à compensation de mouvement de pilonnement configuré pour supporter un objet (50) devant être déchargé par un dispositif de déchargement, par exemple une grue, d'un autre navire ou d'une structure en mer,
dans lequel l'élément porteur (2) est supporté sur la coque du navire (100) au moyen d'un système de support à compensation de mouvement de pilonnement, lequel système comprend :
- un vérin hydraulique (3) disposé entre la coque et l'élément porteur (2), lequel vérin présente un corps de vérin (3a) ainsi qu'un ensemble piston et tige de piston (3b) délimitant une chambre côté tige (31) et une chambre côté piston (32) du vérin hydraulique,
- une transmission hydraulique (HPU) comprenant une pompe hydraulique raccordée à la chambre côté tige (31),
**caractérisé en ce que** le système de support à compensation de mouvement de pilonnement comprend en outre :
- un séparateur intermédiaire (4) présentant une chambre côté hydraulique (42) et une chambre côté gaz (41), laquelle chambre côté hydraulique (42) est raccordée à la chambre côté piston (32) du vérin hydraulique (3),
- une série de réservoirs de gaz sous pression, la série comprenant un réservoir haute pression (5H) et un premier réservoir basse pression et un second réservoir basse pression (5L1, 5L2), chaque réservoir pouvant être raccordé sélectivement par le biais d'une vanne respective de réservoir de gaz (VH, VL1, VL2) à la chambre côté gaz (41) du séparateur intermédiaire, le réservoir haute pression (H) étant rempli de gaz à une pression supérieure à celle des réservoirs basse pression (5L1, 5L2),
- un contrôleur (C) configuré pour commander au moins la transmission hydraulique (HPU) et les vannes de réservoir de gaz (VH, VL1, VL2),
dans lequel le système est configuré pour fournir une séquence de modes qui comprend au moins :
- un mode initial de support pleine charge,
- un premier mode de transfert partiel de charge,
- un second mode de transfert partiel de charge,
- un mode de transfert complet de charge,
dans lequel :
- dans le mode initial de support pleine charge, le réservoir haute pression (5H) est raccordé à la chambre côté gaz (41) du séparateur intermédiaire (4) de sorte que la pression hydraulique ainsi créée dans la chambre côté piston (32) supporte la charge de l'objet (50) et de l'élément porteur (2) de façon à assurer une compensation passive du mouvement de pilonnement,
- dans le premier mode de transfert partiel de charge, à sélectionner lorsque l'objet (50) a été couplé à un dispositif de déchargement, par exemple une grue, d'un autre navire ou d'une structure en mer, en plus du réservoir haute pression (5H), le premier réservoir basse pression (5L1) est raccordé à la chambre côté gaz (41) du séparateur intermédiaire (4) de sorte qu'une première partie (FL1) de la charge de l'objet est transférée vers le dispositif de déchargement,
- dans le second mode de transfert partiel de charge, en plus du réservoir haute pression (5H) et du premier réservoir basse pression (5L1), le second réservoir basse pression (5L2) est raccordé à la chambre côté gaz (41) du séparateur intermédiaire de sorte qu'en plus de la première partie de la charge de l'objet, une seconde partie (FL2) de la charge de l'objet est transférée au dispositif de déchargement, une partie restante de la charge de l'objet étant toujours supportée sur l'élément porteur (2),
- dans le mode de transfert complet de charge, avec le réservoir haute pression (5H), le premier réservoir basse pression (5L1), et le second réservoir basse pression raccordés à la chambre côté gaz (41) du séparateur intermédiaire, la transmission hydraulique (HPU) est actionnée de manière à augmenter la pression hydraulique dans la chambre côté piston (32) pour provoquer le transfert de la partie restante de la charge de l'objet (50) vers le dispositif de déchargement.

2. Navire selon la revendication 1, dans lequel le contrôleur (C) est en outre configuré pour commander la transmission hydraulique (HPU) de manière à fournir, dans le mode initial de support pleine charge, une charge de pré-tension constante en provoquant une pression hydraulique constante dans la chambre côté piston.

3. Navire selon la revendication 1 ou 2, dans lequel le contrôleur (C) est en outre configuré pour commander la transmission hydraulique (HPU) de manière à fournir, dans chacun des premier et second modes de transfert partiel de charge, une compensation active du mouvement de pilonnement.

4. Navire selon l'une quelconque ou plusieurs des revendications 1 à 3, dans lequel le contrôleur est en outre configuré pour commander la transmission hydraulique (HPU) de manière à entraîner, dans le mode de transfert complet de charge, un espacement entre l'élément porteur (2) et l'objet (50) couplé au dispositif de déchargement.

5. Navire selon l'une quelconque ou plusieurs des revendications 1 à 4, dans lequel le contrôleur est connecté à un ou plusieurs capteurs de mouvement de pilonnement déterminant le mouvement de pilonnement du navire et/ou de l'élément porteur.

6. Navire selon l'une quelconque ou plusieurs des revendications 1 à 5, dans lequel le contrôleur est connecté à un ou plusieurs capteurs de position déterminant une hauteur de l'objet par rapport à la coque du navire et/ou à l'élément porteur.

7. Procédé de déchargement d'un objet (50) supporté sur un élément porteur à compensation de mouvement de pilonnement (2) d'un navire (1) selon une ou plusieurs des revendications précédentes, le navire ayant une coque soumise à un mouvement de pilonnement induit par les vagues, procédé dans lequel on utilise un dispositif de déchargement, par exemple une grue, d'un autre navire ou d'une structure en mer,
dans lequel le procédé comprend l'étape de couplage de l'objet au dispositif de déchargement,
dans lequel le procédé implique une séquence de modes du système de support de compensation de mouvement de pilonnement, qui comprend au moins :
- un mode initial de support pleine charge,
- un premier mode de transfert partiel de charge,
- un second mode de transfert partiel de charge, et
- un mode de transfert complet de charge,
dans lequel :
- dans le mode initial de support pleine charge, le réservoir haute pression (5H) est raccordé à la chambre côté gaz (41) du séparateur intermédiaire de sorte que la pression hydraulique ainsi créée dans la chambre côté piston (32) supporte la charge de l'objet et de l'élément porteur de façon à assurer une compensation passive du mouvement de pilonnement,
- dans le premier mode de transfert partiel de charge, à sélectionner lorsque l'objet a été couplé au dispositif de déchargement, en plus du réservoir haute pression (5H), le premier réservoir basse pression (5L1) est raccordé à la chambre côté gaz (41) du séparateur intermédiaire de sorte qu'une première partie de la charge de l'objet est transférée vers le dispositif de déchargement,
- dans le second mode de transfert partiel de charge, en plus du réservoir haute pression (5H) et du premier réservoir basse pression (5L1), le second réservoir basse pression (5L2) est raccordé à la chambre côté gaz (41) du séparateur intermédiaire de sorte qu'en plus de la première partie de la charge de l'objet, une seconde partie de la charge de l'objet est transférée au dispositif de déchargement, une partie restante de la charge de l'objet étant toujours supportée sur l'élément porteur,
- dans le mode de transfert complet de charge, avec le réservoir haute pression (5H), le premier réservoir basse pression (5L1), et le second réservoir basse pression raccordés à la chambre côté gaz (41) du séparateur intermédiaire, le contrôleur commande la transmission hydraulique (HPU) de manière à augmenter la pression hydraulique dans la chambre côté piston (32) pour provoquer le transfert de la partie restante de la charge de l'objet vers le dispositif de déchargement.

8. Procédé selon la revendication 7, dans lequel le contrôleur est en outre configuré et actionné pour commander la transmission hydraulique (HPU) de manière à fournir, dans le mode initial de support pleine charge, une charge de pré-tension constante en provoquant une pression hydraulique constante dans la chambre côté piston.

9. Procédé selon la revendication 7 ou 8, dans lequel le contrôleur (C) est en outre configuré et actionné pour commander la transmission hydraulique (HPU) de manière à fournir, dans chacun des premier et second modes de transfert partiel de charge, une compensation active du mouvement de pilonnement, par exemple dans lequel le contrôleur est connecté à un ou plusieurs capteurs de mouvement de pilonnement déterminant le mouvement de pilonnement du navire et/ou de l'élément porteur.

10. Procédé selon l'une quelconque ou plusieurs des revendications 7 à 9, dans lequel le contrôleur (C) est en outre configuré et actionné pour commander la transmission hydraulique (HPU) de manière à entraîner, dans le mode de transfert complet de charge, un espacement entre l'élément porteur et l'objet couplé au dispositif de déchargement, par exemple une rétraction de l'ensemble piston et piston du vérin au-delà de la position correspondant à l'achèvement du transfert de charge vers le dispositif de déchargement, par exemple dans lequel le contrôleur est connecté à un ou plusieurs capteurs de position déterminant la hauteur de l'objet par rapport à la coque du navire et/ou à l'élément porteur.

11. Procédé selon l'une quelconque ou plusieurs des revendications 7 à 10, dans lequel la première partie de la charge transférée au dispositif de déchargement correspond à entre 40 et 60 % de la charge de l'objet, et dans lequel la seconde partie de la charge transférée au dispositif de déchargement correspond à entre 20 et 40 % de la charge de l'objet de sorte que la partie restante de la charge soit égale à entre 10 et 30 % de la charge de l'objet.

12. Procédé selon l'une quelconque ou plusieurs des revendications 7 à 11, dans lequel l'objet est un composant d'éolienne en mer, par exemple l'un parmi :
- une fondation à installer sur le fond marin, par exemple une fondation monopile ou une chemise,
- un mât, par exemple un mât complet ou un segment de mât,
- une nacelle, par exemple une nacelle dépourvue de pales de rotor ou une nacelle équipée d'une ou plusieurs pales de rotor, par exemple une nacelle avec pales de rotor en configuration en oreilles de lapin, et
- une pale de rotor, par exemple une crémaillère contenant plusieurs pales de rotor.

13. Procédé selon l'une quelconque ou plusieurs des revendications 7 à 12, dans lequel le dispositif de déchargement est une grue montée sur un autre navire, par exemple sur un navire semi-submersible ou sur un navire de type auto-élévateur, la grue étant par exemple montée sur la coque d'un navire de type auto-élévateur qui a été soulevé au-dessus de la mer avant de décharger l'objet du navire.
